# EUROPÄISCHE PATENTANMELDUNG

(11) **EP 1 808 416 A1**
(43) Veröffentlichungstag der Anmeldung: **18.07.2007**
(21) Anmeldenummer: 06024634.5
(22) Anmeldetag: 28.11.2006
(51) Int. Cl.: C02F 3/12, C02F 1/32

(54) **Vorrichtung zur Behandlung von Abwasser in einer Kleinkläranlage**

(30) Priorität: 11.01.2006 DE 10601635
(71) Anmelder: ATB Umwelttechnologien GmbH, 32457 Porta Westfalica (DE)
(72) Erfinder: Koppmann, Mirco, Dipl.-Ing., 32584 Löhne (DE)
(74) Vertreter: Steinmeister, Helmut

(57) **Zusammenfassung**

Vorrichtung (30) zur Behandlung von Abwasser in einer Kleinkläranlage, mit einer Anzahl von Aggregaten einschließlich einer Klarwasser-Entnahmepumpe (34) zum Abfördern des geklärten Wassers aus der Kleinkläranlage, dadurch gekennzeichnet, daß die Aggregate ferner eine UV-Desinfektionseinheit (40) zur Desinfektion des von der Klarwasser-Entnahmepumpe (34) abgeförderten Klarwassers durch ultraviolettes Licht umfassen.

## Beschreibung

Die vorliegende Erfindung betrifft eine Vorrichtung zur Behandlung von Abwasser in einer Kleinkläranlage gemäß dem Oberbegriff des Anspruchs 1.

In Regionen, in denen es nicht möglich ist, alle Haushalte an das öffentliche Kanalnetz anzuschließen, werden häufig relativ klein dimensionierte Kläranlagen zur Reinigung des häuslichen Abwassers genutzt. Kleinkläranlagen, wie sie beispielsweise in der DE 199 07 980 C2 sowie in der EP 00 103 417 dargestellt sind, umfassen ein Vorklärbecken, gegebenenfalls ein Pufferbecken sowie ein Behandlungsbecken, in welchem die eigentliche biologische Abwasserreinigung stattfindet. Diese Anordnung kann zu einem Dreikammerbecken zusammengefaßt sein, bei welchem innerhalb eines einzigen Behälters die Becken durch gesonderte Kammern gebildet werden, die durch Trennwände voneinander getrennt sind. Im Rahmen der folgenden Beschreibung wird der Begriff "Kleinkläranlage" in einem weiteren Sinne verwendet und bezieht sich nicht ausschließlich auf Anlagen der vorstehend beschriebenen Art, sondern auf kleinere Kläranlagen im allgemeinen.

Die Klärung im Behandlungsbecken wird durch eine Vorrichtung vorgenommen, die verschiedene Aggregate mit unterschiedlichen Funktionen umfaßt. Eines dieser Aggregate ist eine Klarwasser-Entnahmepumpe zum Abfördern des geklärten Wassers aus der Kleinkläranlage. Das abgeförderte Klarwasser wird entweder in einen oberirdischen Vorfluter geleitet oder unterirdisch versickert. Bei den weiteren Aggregaten kann es sich um einen Belüfter, einen Füllstandsmesser, eine Schlammpumpe oder dergleichen handeln.

Obwohl die bekannten Anlagen in der Regel zufriedenstellende Klärergebnisse liefern, erfüllt die vorstehend genannte biologische Abwasserreinigung nicht immer den erforderlichen hygienischen Standard. Dies ist vor allem in der Nähe von Trinkwasserentnahmestellen oder bei einer Einleitung des Klarwassers in ein Badegewässer der Fall. Bisher ist keine Möglichkeit bekannt, eine Kleinkläranlage der eingangs genannten Art auf einfache und zufriedenstellende Weise zu modifizieren, so dass sie den gesteigerten Anforderungen in solchen Fällen genügt.

Aufgabe der vorliegenden Erfindung ist es daher, eine Vorrichtung der eingangs genannten Art zu schaffen, die mit verhältnismäßig einfachen, unkomplizierten und kostengünstigen Mitteln eine Verbesserung der hygienischen Qualität des geklärten Wassers ermöglicht.

Diese Aufgabe wird erfindungsgemäß durch die Vorrichtung mit den Merkmalen des Anspruchs 1 gelöst.

Die erfindungsgemäße Vorrichtung umfaßt als weiteres Aggregat eine UV-Desinfektionseinheit, die zur Desinfektion des von der Klarwasser-Entnahmepumpe abgeförderten Klarwassers durch ultraviolettes Licht dient. Hierdurch ist es möglich, der biologischen Klärung eine UV-Desinfektion als Nachbehandlung anzuschließen, so dass im Klarwasser enthaltene Mikroorganismen abgetötet werden und das Klarwasser damit auch höheren hygienischen Anforderungen genügt. Die Behandlung mittels UV-Licht ist besonders vorteilhaft, da keine Rückstände oder chemische Nebenprodukte im Wasser verbleiben. Aufgrund ihres kompakten Aufbaus lassen sich derartige UV-Desinfektionseinheiten platzsparend und ohne erheblichen Kostenaufwand ohne weiteres in einer Kleinkläranlage unterbringen. Auch eine Nachrüstung der bekannten Anlagen ist denkbar.

Vorzugsweise ist die UV-Desinfektionseinheit in der Ablaufleitung der Klarwasser-Entnahmepumpe angeordnet.

In einer bevorzugten Ausführungsform sind die Aggregate der erfindungsgemäßen Vorrichtung einschließlich der Klarwasser-Entnahmepumpe und der UV-Desinfektionseinheit in einen gemeinsamen Gehäuse angeordnet.

In einer weiteren bevorzugten Ausführungsform umfaßt die Vorrichtung eine Steuereinrichtung zur Steuerung der Intensität der Strahlung der Lichtquelle der UV-Desinfektionseinheit und/oder der Durchflußdauer des Klarwassers durch die UV-Desinfektionseinheit.

Die UV-Desinfektionseinheit wird vorzugsweise mit ultraviolettem Licht mit einer Wellenlänge von 254 nm betrieben.

Anspruch 6 betrifft ein Verfahren zum Betrieb der erfindungsgemäßen Vorrichtung, während Anspruch 7 eine besondere Ausgestaltung dieses Verfahrens betrifft.

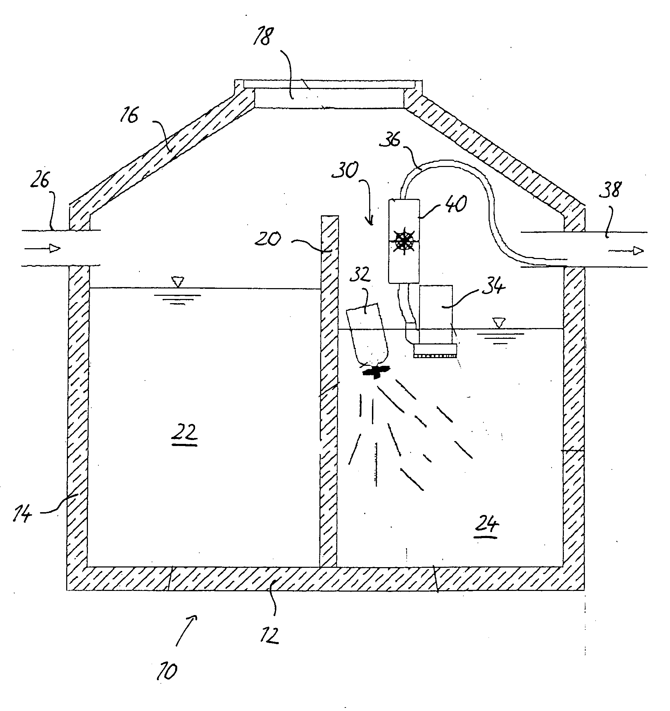

Im folgenden wird ein bevorzugtes Ausführungsbeispiel der Erfindung anhand der beigefügten Zeichnung näher erläutert.

Die einzige Figur zeigt einen schematischen Querschnitt durch eine bevorzugte Ausführungsform der erfindungsgemäßen Vorrichtung.

In der Figur bezeichnet die Bezugsziffer 10 einen Behälter mit kreisförmigem Grundriss, der einen Boden 12, eine zylindrische Seitenwand 14 und ein konisches Kopfstück 16 umfaßt. Der Behälter 10 kann insgesamt aus Beton bestehen. Abweichend von der schematischen Darstellung in der Figur ist die Seitenwand 14 üblicherweise aus Ringsegmenten zusammengesetzt und die einzelnen Segmente sind übereinander auf den Boden 12 gestapelt, während das Kopfstück 16 auf das oberste Ringsegment aufgesetzt ist. Das Kopfstück 16 umfaßt an seinem oberen Ende eine kreisförmige Öffnung 18, die durch einen Deckel geschlossen werden kann.

Das Innere des Behälters 10 ist durch eine senkrechte Trennwand 20 in ein Vorklärbecken 22 und ein Behandlungsbecken 24 aufgeteilt. Durch einen Zulauf 26 im oberen Bereich der Seitenwand 14 tritt Schmutzwasser zunächst in das Vorklärbecken 22 ein und kann dort für eine bestimmte Zeit ruhen, so dass sich Schlamm am Grund des Vorklärbeckens 22 absetzen kann. Nach dieser Absetzphase kann das vorgeklärte Wasser durch eine nicht dargestellte Pumpe in das Behandlungsbecken 24 gepumpt werden, in welchem die eigentliche biologische Abwasserreinigung stattfindet. Es wird angemerkt, dass in der Praxis häufig Dreikammerbehälter verwendet werden, die außer einem Vorklärbecken und einem Behandlungsbecken ferner ein Pufferbecken aufweisen, in welches das vorgeklärte Wasser aus dem Vorklärbecken 22 zunächst eingeleitet wird, bevor es weiter in das Behandlungsbecken 24 gepumpt wird. Da dies für die Funktionsweise der vorliegenden Erfindung unerheblich ist, ist in der Figur eine vereinfachte Variante dargestellt, die nur das Vorklärbecken 22 umfaßt.

Innerhalb des Behandlungsbeckens 24 befindet sich eine Vorrichtung 30 zur Behandlung des Abwassers, die mehrere Aggregate umfaßt. Eines hiervon ist ein Tauchbelüfter 32, der den für eine aerobe Klärung notwendigen Sauerstoff in das Abwasser einträgt. Dieser Sauerstoff wird von Mikroorganismen aufgenommen, die in dem im Behandlungsbecken 24 befindlichen Belebtschlamm vorhanden sind und die Schmutzstoffe des Abwassers in Biomasse umwandeln. Diese Belüftung durch den Tauchbelüfter 32 findet periodisch statt. In Absetzphäsen zwischen den Belüftungsperioden wird das Wasser in der Behandlungskammer 24 in Ruhe gehalten, so dass die Schlammanteile auf den Grund absinken können und sich in der Nähe der Oberfläche eine Klarwasserphase bildet. Dieses Klarwasser in Oberflächennähe ist somit bereits biologisch vorgeklärt.

Eine Klarwasser-Entnahmepumpe 34 als weiteres Aggregat der Vorrichtung 30 ist in die Klarwasserphase im Behandlungsbecken 24 eingetaucht, so dass sie das Klarwasser über eine Ablaufleitung 36 in einen in der Wand 14 des Behälters 10 vorgesehenen Ablauf 38 pumpen kann, durch welchen es nach außen abfließen kann. Die Klarwasser-Entnahmepumpe 34 wird intervallweise während der Absetzphasen betrieben, in denen sich eine ruhige Klarwasserphase ausbildet. Innerhalb der Ablaufleitung 36 ist als weiteres Aggregat eine UV-Desinfektionseinheit 40 angeordnet, die dazu dient, das durch die Klarwasser-Entnahmepumpe 34 abgeförderte Klarwasser mittels ultraviolettem Licht zu desinfizieren, so dass das Klarwasser, das den Ablauf 38 erreicht und an die Umwelt abgegeben wird, keimfrei ist. Die UV-Desinfektionseinheit umfaßt zu diesem Zweck eine Lichtquelle für ultraviolettes Licht, die innerhalb eines Leitungsrohrs angeordnet ist, so dass das durch das Rohr strömende Wasser einer intensiven ultravioletten Strahlung ausgesetzt wird. Intensität und Wellenlänge dieser Strahlung sind so zu bemessen, dass die im Wasser enthaltenen Mikroorganismen möglichst wirkungsvoll abgetötet werden. Als besonders effektiv hat sich eine Wellenlänge von 254 nm erwiesen. Ferner kann die Desinfektionsleistung durch eine geeignete Bemessung der Durchflußzeit des die UV-Desinfektionseinrichtung 40 durchströmenden Klarwassers gesteuert werden. Je länger die Durchflußzeit ist, desto länger kann das UV-Licht auf die im Wasser enthaltenen Mikroorganismen einwirken. Ferner ist die Intensität der Strahlung geeignet zu wählen.

Die Behandlungsparameter, also insbesondere die Durchflußdauer durch die UV-Desinfektionseinheit sowie die Intensität, können durch eine in der Figur nicht dargestellte Steuereinheit gesteuert werden. Diese kann auch dazu verwendet werden, die Betriebsintervalle der UV-Desinfektionseinheit 40 mit denjenigen der Klarwasser-Entnahmepumpe 34 derart zu synchronisieren, dass die UV-Desinfektionseinheit 40 während des Betriebs der Klarwasser-Entnahmepumpe 34 betrieben wird. Ferner kann die UV-Desinfektionseinheit 40 bereits früher eingeschaltet werden als die Klarwasser-Entnahmepumpe 34 und ihren Betrieb später beenden, so daß das Betriebsintervall der Pumpe 34 in das längere Betriebsintervall der UV-Desinfektionseinheit 40 fällt. Als besonders wirkungsvoll hat sich eine Betriebsweise erwiesen, bei welcher ein Betriebsintervall der UV-Desinfektionseinheit 40 5 Minuten vor dem Beginn eines Betriebsintervalls der Klarwasser-Entnahmepumpe 34 beginnt und 5 Minuten nach dem Ende eines Betriebsintervalls der Klarwasser-Entnahmepumpe 34 endet.

Die Aggregate der Vorrichtung 30 können in einem gemeinsamen Gehäuse untergebracht sein, so dass die Vorrichtung 30 ein Modul bildet, dass entnehmbar in dem Gehäuse 10 angebracht werden kann, beispielsweise durch Einhängen an der Trennwand 20. Es versteht sich, dass es ferner möglich ist, nur einen Teil der Aggregate in einem Gehäuse zusammenzufassen, also insbesondere die Klarwasser-Entnahmepumpe 34 und die UV-Desinfektionseinheit 40.

## Patentansprüche

1. Vorrichtung (30) zur Behandlung von Abwasser in einer Kleinkläranlage, mit einer Anzahl von Aggregaten einschließlich einer Klarwasser-Entnahmepumpe (34) zum Abfördern des geklärten Wassers aus der Kleinkläranlage, **dadurch gekennzeichnet, daß** die Aggregate ferner eine UV-Desinfektionseinheit (40) zur Desinfektion des von der Klarwasser-Entnahmepumpe (34) abgeförderten Klarwassers durch ultraviolettes Licht umfassen.

2. Vorrichtung gemäß Anspruch 1, **dadurch gekennzeichnet, daß** die UV-Desinfektionseinheit (40) in der Ablaufleitung (36) der Klarwasser-Entnahmepumpe (34) angeordnet ist.

3. Vorrichtung gemäß Anspruch 1. oder 2, **dadurch gekennzeichnet, daß** die Aggregate (34,40) einschließlich der Klarwasser-Entnahmepumpe (34) und der UV-Desinfektionseinheit (40) in einem gemeinsamen Gehäuse angeordnet sind.

4. Vorrichtung gemäß einem der Ansprüche 1 bis 3, **gekennzeichnet durch** eine Steuereinrichtung zur Steuerung der Intensität der Strahlung der Lichtquelle der UV-Desinfektionseinheit (40) und/oder der Durchflußdauer des Klarwassers **durch** die UV-Desinfektionseinheit (40).

5. Vorrichtung gemäß einem der Ansprüche 1 bis 4, **dadurch gekennzeichnet, daß** die Lichtquelle der UV-Desinfektionseinheit (40) ultraviolettes Licht mit einer Wellenlänge von 254 nm emittiert.

6. Verfahren zum Betrieb einer Vorrichtung (30) zur Behandlung von Abwasser gemäß einem der vorhergehenden Ansprüche, **dadurch gekennzeichnet, daß** sowohl die Klarwasser-Entnahmepumpe (34) als auch die UV-Desinfektionseinheit (40) intervallweise betrieben werden, und daß jeweils ein Betriebsintervall der Klarwasser-Entnahmepumpe (34) innerhalb eines Betriebsintervalls der UV-Desinfektionseinheit (40) liegt.

7. Verfahren gemäß Anspruch 6, **dadurch gekennzeichnet, daß** ein Betriebsintervall der UV-Desinfektionseinheit (40) 5 Minuten vor dem Beginn eines Betriebsintervalls der Klarwasser-Entnahmepumpe (34) beginnt und/oder 5 Minuten nach dem Ende eines Betriebsintervalls der Klarwasser-Entnahmepumpe (34) endet.
